# EUROPEAN PATENT SPECIFICATION

(11) **EP 1 307 106 B1**
(45) Date of publication and mention of the grant of the patent: **22.03.2006**
(21) Application number: 01967853.1
(22) Date of filing: 26.07.2001
(51) Int. Cl.: A23C 9/142, B01D 61/14

(54) **METHOD FOR FILTERING MILK**
VERFAREN ZUR FILTRATION VON MILCH
PROCEDE DE LACTOFILTRATION

(30) Priority: 01.08.2000 NL 1015851
(43) Date of publication of application: 07.05.2003
(73) Proprietor: Friesland Brands B.V., 8937 AC Leeuwarden (NL)
(72) Inventor: KROMKAMP, ir. Jantje, NL-6711 BE Ede (NL); VAN RIJN, dr. Cornelis, Johann, NL-7255 DB Hengelo (NL)
(74) Representative: Jilderda, Anne Ayolt
(86) International application number: PCT/NL2001/000576
(87) International publication number: WO 2002/009527

(56) References cited:
- EP-A- 0 879 635
- WO-A-94/13148
- WO-A-98/13131
- WO-A-98/57549
- FR-A- 2 494 586
- US-A- 4 140 806
- US-A- 5 356 651
- US-A- 5 401 523
- DATABASE WPI Section Ch, Week 199203 Derwent Publications Ltd., London, GB; Class D13, AN 1992-019273 XP002166971 & JP 03 266921 A (MEIJI MILK PROD CO LTD), 27 November 1991 (1991-11-27)
- A. GUERRA: "Low cross-flow velocity microfiltration of skim milk for removal of bacterial spores" INTERNATIONAL DAIRY JOURNAL, vol. 7, no. 12, 1997, pages 849-861, XP000993110
- ROSENBERG M: "CURRENT AND FUTURE APPLICATIONS FOR MEMBRANE PROCESSES IN THE DAIRYINDUSTRY" TRENDS IN FOOD SCIENCE AND TECHNOLOGY,GB,ELSEVIER SCIENCE PUBLISHERS, vol. 6, no. 1, 1995, pages 12-19, XP000579130 ISSN: 0924-2244

## Description

The present invention relates to a method for removing bacteria and bacterial spores from milk. This method can be applied particularly advantageously in the preparation of consumer milk and cheese, wherein the necessary heating of the milk can be reduced to a minimum.

In the production of a milk product with a good shelf-life and a good taste, it is necessary to seek a balance between the desire to provide a product with the most favourable possible bacteriological quality which is at the same time not adversely affected by necessary heat treatment.

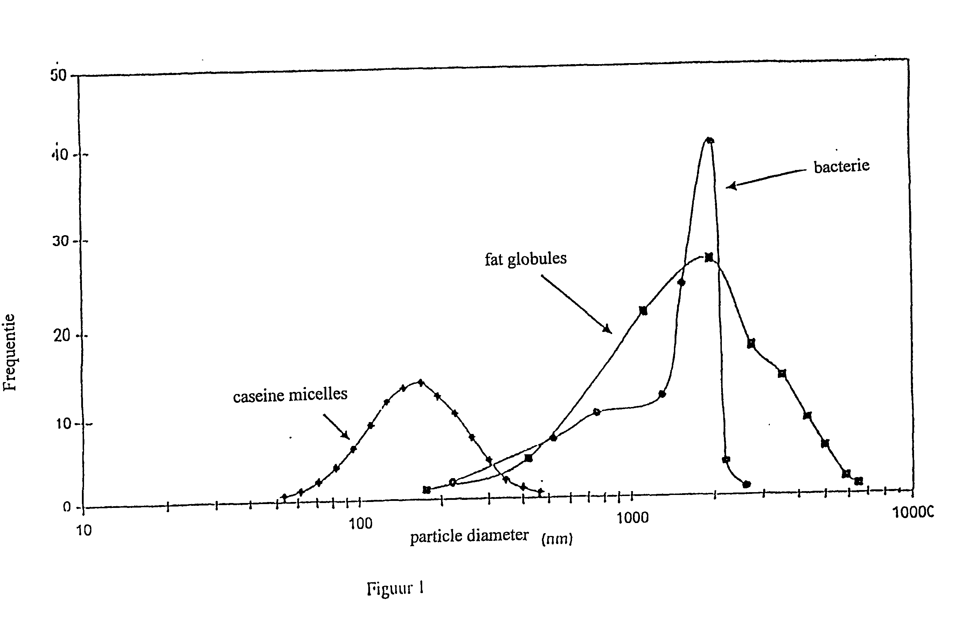

Microfiltration is often applied to sterilize liquids, for instance in the pharmaceutical industry. Filters are generally applied for this purpose with a pore size smaller than or equal to 200 nm. The possibility of removing bacteria from milk using microfiltration has already been described. Casein micelles are on average about six times smaller than micro-organisms, but for both components there is a size distribution of considerable width. There even seems to be an overlap in the size distributions: the largest casein micelles are probably just as large as the smallest bacteria. It will further be apparent that because of the comparable size in particles of bacteria and fat, the milk for filtering must be skimmed prior to filtration. The annexed figure 1 from an article by J.-L. Maubois, Bulletin of the IDF, 320, 37 (1997) shows the occurrence of the different particles in milk in accordance with size (nm, logarithmic).

The types of membrane applied for microfiltering of milk can generally be characterized as membranes with a determined pore size distribution (no precise pore dimensions) and a thickness which is a multiple of and up to even hundreds of times larger than the average pore diameter. There is no direct relation between the bacterial retention and the average pore size of the membrane. During microfiltration of milk a high degree of removal of bacteria can be achieved with a ceramic membrane of 1400 nm, while it is known that barely more than half the bacteria are smaller than 1400 nm. The retention of the bacteria greatly depends, among other things, on the process history and process conditions. In addition, the retention of the bacteria also depends on the morphology of the membrane filters, such as the tortuosity of the pores. Said factors determine the degree of contamination of the filter during performing of the process. This makes the application of microfiltration for removing bacteria complex, because it is necessary to take into account this dependence on the bacteria retention in the choice of the membrane filters and the applying of the filtering process.

Described in the international patent application WO 96/36238 is a method for preparing consumption milk with an improved shelf-life. This process is based on microfiltration. A significant limitation of the method is the selectivity between casein micelles and bacteria. In order to realize sufficient removal of bacteria, operations are usually carried out, in respect of the relatively low selectivity, under conditions wherein a part of the casein is retained by the microfilter. Because a balance has to be found between product optimization (the fewest possible bacteria) and cost minimization (the highest possible flux of the liquid flow), the permeate yield of the microfiltration process is usually limited in this respect to less than or equal to 95%. In this process the fat-rich fraction of the milk is moreover pre-separated from the milk and treated separately. In the described situation microfiltration of milk with the fat would only provide a worse result through rapid contamination of the filter.

Described in the international patent application WO 97/49295 is a process for preparing sterile milk. Membranes with a pore size between 50 and 200 nm are applied for this process. The largest part of the casein in the milk remains behind in the retentate in this process. This fat-rich and casein-rich retentate is subjected to a heating at high temperature and then added to the permeate. A great drawback of this process is that, in addition to the fat, the largest part of the casein in milk is also retained by the microfilter. This has the result that a large part of the milk still has to be sterilized by means of another sterilization technique, usually high heating, which causes impairment of the taste. In addition, the relatively low flux results in considerably higher costs.

*US patent 4,140,806 describes in the separation of skim milk from liquid milk the use of a filter in which the main quantity of the filter pores each has a diameter of 200 to 10.000 nm in which process the milk products flow along the filter surface on one side of the filter at a velocity of 0,5 to 20 m*/*sec. In WO 98*/*13131 a system for filtering medical and biological fluids has been described wherein a filter membrane is provided having precisely dimensioned pore sizes, adapted to the type of articles. The membranes may be of a variety of thicknesses, such as 1000 nm, 3000 nm, 5000 nm or 10.000 nm.*

In the Netherlands patent no. 1006118C and the corresponding *EP patent application 879635* is described a device for filtering a fermented liquid, wherein bacteria are removed. According to the invention described therein, the filter comprises a thin membrane filter layer with pores of a precisely determined size which is adapted to the micro-organisms such as yeast cells, which pores are formed making use of photolithographic techniques. The use of the device for filtering fermented liquids produces a reliable filtration result.

The use of a membrane filter with a thin membrane filter layer and pores of a precisely determined size, made as described for instance in NL 1006118C, also produces a reliable filtration result when applied to milk, with an unexpectedly high selectivity between bacteria and casein micelles. This is surprising since the bacteria and the casein micelles differ little from each other in dimensions, and the size distributions even partially overlap each other (see annexed figure1). The pores are preferably formed making use of photolithographic techniques, in further preference with a size of less than 1500 nm, less than 1000 nm or less than 500 nm and of a minimum of about 50 nm. The standard deviation (STD) of the size of the pores is less than 5%, preferably less than 3% or 1%.

The tortuosity of the pores in the membrane filter layer to be applied is small, smaller than about 0.1, preferably smaller than 0.01.

The membrane filter layer has a thickness which is smaller than 2000 nm, preferably smaller than 1500 nm or smaller than 1000 nm or than 500 nm, and of a minimum of about 50 nm.

The membrane surface of the applied membrane filter is also smooth, i.e. the roughness thereof is less than 100 nm, preferably less than 50 nm, more preferably less than 10 nm.

It will be apparent that all these dimensions are dependent on the product to be produced from which bacteria are removed, such as a product with a shelf-life comparable to that of pasteurized or sterilized milk, i.e. dependent on the desired bacteriological quality of the product.

A membrane filter is generally applied which includes a supporting carrier layer of for instance ceramic, wherein the membrane or membrane filter is itself designated as membrane filter layer. The use of a membrane filter including this carrier layer in the removal of bacteria from milk also forms part of the present invention.

When the process of the invention is applied, a greater reduction in bacteria numbers is possible without the casein content in the retentate flow in the process increasing. In addition, higher flux levels are found than those reported for other known microfiltration devices. Finally, it is unexpectedly not necessary to skim the milk prior to the filtration.

When microfiltration with the above stated membrane filter is applied, it is possible to achieve a distinct separation between casein micelles on the one hand and bacteria and bacterial spores on the other. As is apparent from the dimensions of milk particles as shown in figure 1, a filter with a pore diameter of about 50 to about 1500 nm is preferably applied, wherein the casein micelles enter the permeate flow and the bacteria together with the fat globules enter the retentate flow.

In respect of the small differences in size between casein micelles and bacteria, it is important for a successful progression of the microfiltration process to achieve the clearest possible separation between said components. The use of a membrane filter with pores of a precisely determined size is of great importance here. If these membranes then have a very thin filter layer, a very smooth membrane surface and pores with a very small tortuosity, the total microfiltration process then displays an unexpectedly great improvement. A significant advantage is that the bacteria retention is practically constant during the filtration process when a determined membrane filter is applied, and is therefore no longer dependent on process history or process conditions and the like, since the pores of the membrane filter become much less contaminated than when a conventional microfilter is applied. Flux levels are herein attained which are higher than reported for known microfiltration devices. The flux of casein micelles through the membrane was already large with a membrane with a filter layer of a thickness of 1000 to 2000 nm. Calculations demonstrate that the flux of casein micelles increases still further when there is a further decrease in the filter layer thickness to for instance 500 nm or 200 nm. The bacteria are already retained before reaching the membrane, while casein micelles pass through the membrane filter relatively quickly, so that no accumulation of components occurs just prior to the membrane such that this exerts a strong influence on the effective retention of bacteria. Further, the milk microfiltration process with the described membrane filters can surprisingly be carried out at very low transmembrane pressure. A maximum flux is usually already reached at a transmembrane pressure of less than 200 mbar. Under the transmembrane pressures applied in the examples the flux is negligibly small in conventional microfiltration membranes.

When the process of the present invention is applied in the removal of bacteria in milk, the largest part of the casein in milk passes through the membrane and enters the permeate. The permeate yield can hereby be increased compared to the application of conventional microfiltration techniques, and only a small part of the milk (retentate and/or the cream) still has to be sterilized in other manner. In this way it is possible to prepare sterile milk with a considerably improved taste compared to sterile milk and UHT milk prepared in conventional manner, wherein a heating process of at least 1 second at 135°C is applied as specified in the Dutch Commodities Act, Foodstuffs (B-1.3.1, schedule III, published 12-12-1999). It is also possible to prepare (highly) pasteurized milk with an improved shelf-life compared to pasteurized milk prepared in conventional manner, wherein a high temperature is applied for s short time (e.g. a minimum of 71.7°C for 15 seconds), see above stated Dutch Commodities Act.

It is even found no longer necessary to skim the milk when the thin membrane filter as described above is applied. The fat particles are retained together with the bacteria in the retentate flow without this having an adverse effect on the permeation of casein micelles through the filter. In this way the permeate yield of the process is optimized. The fat content of the permeate flow can of course be brought to the desired level by mixing it with a desired quantity of sterile cream. The retentate could be used for this purpose after sterilization by for instance heating.

It will be apparent to the skilled person that the method of the present invention can likewise be advantageously applied in processes related to the preparation of consumer milk, wherein milk in any form is purified, such as for instance in the removal of bacteria and bacteria spores from cheese milk and in the pretreatment of cheese milk for the purpose of preparing cheese, such as for instance raw milk cheese.

The invention is further elucidated with reference to the following examples which serve only by way of illustration and do not affect the scope of the invention.

### Example 1

Skim milk is treated at 50°C with a smooth (surface roughness of less than 100 nm) membrane filter having a filter layer with a pore size of 750 nm (STD 5%) and a thickness of 1000 nm. At a pressure of 25 mbar a flux is measured of 263 l/m²h (litres per m² membrane surface area per hour). At a pressure of 37 mbar the flux increases to 630 l/m²h.

### Example 2

Skim milk is treated at 50°C with a smooth membrane filter having a filter layer with a pore size of 1200 nm (STD 5%) and a thickness of 1000 nm. At a pressure of 10 mbar a flux is measured of 3500 l/m²h.

### Example 3

Skim milk is treated at 50°C with a smooth membrane filter having a filter layer with a pore size of 750 nm (STD 5%) and with a pore size of 1200 nm (STD 5%) at a transmembrane pressure of about 20 mbar. In neither case is a protein retention measured; a Kjeldahl determination of nitrogen gives a retention of <0.01.

### Example 4

Simulated Milk Ultrafiltrate (SMUF) as described by R. Jenness and J. Koops in Neth. Milk Dairy J. 16, 153 (1962), inoculated with *Bacillus subtilis* bacteria is treated in a dead end configuration, wherein the liquid speed tangentially of the membrane is zero, with a smooth filter with a pore size of 500 nm (STD 5%) and a thickness of 1000 nm. A decimal reduction in bacteria of 6.6 is measured.

## Claims

1. Method for removing bacteria and bacterial spores from milk, **characterized in that** the milk is filtered over a membrane filter with a smooth membrane surface having a roughness of less than 100 nm which comprises a thin filter layer of a thickness which is smaller than 2000 nm with pores of a precisely determined size with an STD of less than 5% and a small tortuosity of smaller than 0.1.

2. Method according to claim 1, **characterized in that** the filter layer has a thickness which is smaller than 1500 nm.

3. Method according to claim 2, **characterized in that** the filter layer has a thickness which is smaller than 1000 nm.

4. Method according to claim 3, **characterized in that** the filter layer has a thickness which is smaller than 500 nm.

5. Method according to any of the foregoing claims, **characterized in that** the pores are formed making use of photolithographic techniques.

6. Method according to any of the foregoing claims, **characterized in that** the filter layer contains pores with a size of less than 1500 nm.

7. Method according to claim 6, **characterized in that** the filter layer contains pores with a size of less than 1000 nm.

8. Method according to claim 7, **characterized in that** the filter layer contains pores with a size of less than 500 nm.

9. Method according to any of the foregoing claims, **characterized in that** the milk is filtered at a transmembrane pressure of less than 200 mbar.

10. Method for producing cheese from cheese milk, **characterized in that** the cheese milk is filtered as described in any of the foregoing claims.

11. Method for producing consumer milk with a determined fat content, **characterized in that** milk is filtered in accordance with the method of any of the claims 1 - 9, wherein the milk is divided into a retentate flow and a permeate flow, wherein the permeate flow, which contains casein micelles, is further processed to consumer milk by mixing this flow if desired with a desired quantity of sterile cream and/or the retentate flow after heating.

12. Method according to claim 11, wherein the sterile cream comes from the retentate flow after heating.

## Patentansprüche

1. Verfahren zur Entfernung von Bakterien und bakteriellen Sporen aus Milch, **dadurch gekennzeichnet, dass** die Milch über einen Membranfilter mit einer glatten Membranoberfläche filtriert wird, die eine Rauigkeit von weniger als 100 nm hat, die eine dünne Filterschicht mit einer Dicke aufweist, die kleiner ist als 2000 nm, mit Poren, die eine präzise festgelegte Größe mit einer StA von weniger als 5 % und eine geringe Tortuosität von kleiner als 0,1 aufweisen.

2. Verfahren gemäß Anspruch 1, **dadurch gekennzeichnet, dass** die Filterschicht eine Dicke aufweist, die kleiner ist als 1500 nm.

3. Verfahren gemäß Anspruch 2, **dadurch gekennzeichnet, dass** die Filterschicht eine Dicke aufweist, die kleiner ist als 1000 nm.

4. Verfahren gemäß Anspruch 3, **dadurch gekennzeichnet, dass** die Filterschicht eine Dicke aufweist, die kleiner ist als 500 nm.

5. Verfahren gemäß eines der vorherigen Ansprüche, **dadurch gekennzeichnet, dass** die Poren unter Verwendung von photolithographischen Techniken gebildet werden.

6. Verfahren gemäß eines der vorherigen Ansprüche, **dadurch gekennzeichnet, dass** die Filterschicht Poren mit einer Größe von weniger als 1500 nm enthält.

7. Verfahren gemäß Anspruch 6, **dadurch gekennzeichnet, dass** die Filterschicht Poren mit einer Größe von weniger als 1000 nm enthält.

8. Verfahren gemäß Anspruch 7, **dadurch gekennzeichnet, dass** die Filterschicht Poren mit einer Größe von weniger als 500 nm enthält.

9. Verfahren gemäß eines der vorherigen Ansprüche, **dadurch gekennzeichnet, dass** die Milch bei einem Transmembrandruck von weniger als 200 mbar filtriert wird.

10. Verfahren zur Herstellung von Käse aus Käsemilch, **dadurch gekennzeichnet, dass** die Käsemilch filtriert wird, wie in einem der vorherigen Ansprüche beschrieben.

11. Verfahren zur Herstellung von Konsummilch mit einem bestimmten Fettgehalt, **dadurch gekennzeichnet, dass** die Milch gemäß des Verfahrens nach einem der Ansprüche 1 bis 9 filtriert wird, wobei die Milch in einen Rückstanddurchlauf und einen Permeatdurchlauf geteilt wird, wobei der Permeatdurchlauf, der die Caseinmicellen enthält, weiter zur Konsummilch verarbeitet wird, indem dieser Durchlauf, sofern gewünscht, mit einer gewünschten Menge von steriler Sahne und/oder dem Rückstanddurchlauf nach Erhitzung gemischt wird.

12. Verfahren gemäß Anspruch 11, wobei die sterile Sahne aus dem Retentatdurchlauf nach Erhitzung stammt.

## Revendications

1. Procédé pour retirer des bactéries ou des spores bactériens du lait, **caractérisé en ce que** le lait est filtré sur un filtre membranaire avec une surface membranaire lisse ayant une rugosité inférieure à 100 nm qui comprend une fine couche filtrante d'une épaisseur inférieure à 2000 nm avec des pores d'une taille déterminée précisément avec un ET de moins de 5 % et une petite tortuosité de moins de 0,1.

2. Procédé selon la revendication 1, **caractérisé en ce que** la couche filtrante a une épaisseur qui est inférieure à 1500 nm.

3. Procédé selon la revendication 2, **caractérisé en ce que** la couche filtrante a une épaisseur qui est inférieure à 1000 nm.

4. Procédé selon la revendication 3, **caractérisé en ce que** la couche filtrante a une épaisseur qui est inférieure à 500 nm.

5. Procédé selon l'une quelconque des revendications précédentes, **caractérisé en ce que** les pores sont formés en se servant de techniques photolithographiques.

6. Procédé selon l'une quelconque des revendications précédentes, **caractérisé en ce que** la couche filtrante contient des pores ayant une taille inférieure à 1500 nm.

7. Procédé selon la revendication 6, **caractérisé en ce que** la couche filtrante contient des pores ayant une taille inférieure à 1000 nm.

8. Procédé selon la revendication 7, **caractérisé en ce que** la couche filtrante contient des pores ayant une taille inférieure à 500 nm.

9. Procédé selon l'une quelconque des revendications précédentes, **caractérisé en ce que** le lait est filtré à une pression transmembranaire inférieure à 200 mbar.

10. Procédé pour produire du fromage à partir de lait de fromagerie, **caractérisé en ce que** le lait de fromagerie est filtré comme décrit dans l'une quelconque des revendications précédentes.

11. Procédé pour produire du lait de consommation ayant une teneur en gras déterminée, **caractérisé en ce que** du lait est filtré conformément au procédé de l'une quelconque des revendications 1 à 9, dans lequel le lait est divisé en un flux retenu et un flux perméable, dans lequel le flux perméable, qui contient des micelles de caséine, est davantage transformé en lait de consommation en mélangeant ce flux, si souhaité, avec une quantité souhaitée de crème stérile et/ou le flux retenu après chauffage.

12. Procédé selon la revendication 11, dans lequel la crème stérile provient du flux retenu après chauffage.
